# EUROPÄISCHE PATENTSCHRIFT

(11) **EP 3 369 205 B1**
(45) Veröffentlichungstag und Bekanntmachung des Hinweises auf die Patenterteilung: **09.09.2020**
(21) Anmeldenummer: 16790881.3
(22) Anmeldetag: 28.10.2016
(51) Int. Cl.: H04L 9/06

(54) **ALTERNATIVE DARSTELLUNG DES KRYPTO-ALGORITHMUS DES**
ALTERNATIVE REPRESENTATION OF THE CRYPTO ALGORITHM DES
REPRÉSENTATION ALTERNATIVE DE L'ALGORITHME CRYPTOGRAPHIQUE DES

(30) Priorität: 30.10.2015 DE 102015014038
(43) Veröffentlichungstag der Anmeldung: 05.09.2018
(73) Patentinhaber: Giesecke+Devrient Mobile Security GmbH, 81677 München (DE)
(72) Erfinder: BAUER, Sven, 85591 Vaterstetten (DE); DREXLER, Hermann, 80337 München (DE); PULKUS, Jürgen, 80469 München (DE)
(86) Internationale Anmeldenummer: PCT/EP2016/001807
(87) Internationale Veröffentlichungsnummer: WO 2017/071814

(56) Entgegenhaltungen:
- HAMILTON E LINK ET AL: "Clarifying Obfuscation: Improving the Security of White-Box Encoding", INTERNATIONAL ASSOCIATION FOR CRYPTOLOGIC RESEARCH,, Bd. 20040202:165204, 30. Januar 2004 (2004-01-30), Seiten 1-11, XP061000811, [gefunden am 2004-01-30]
- CHOW S ET AL: "A White-Box DES Implementation for DRM Applications", INTERNET CITATION, 2002, XP002476832, Gefunden im Internet: URL:http://crypto.stanford.edu/DRM2002/whi tebox.pdf [gefunden am 2008-04-16]
- AKIRA MATSUNAGA ET AL: "Security Evaluation of a Type of Table-Network Implementation of Block Ciphers", 6. Dezember 2006 (2006-12-06), ADVANCES IN COMPUTER SCIENCE - ASIAN 2006. SECURE SOFTWARE AND RELATED ISSUES; [LECTURE NOTES IN COMPUTER SCIENCE], SPRINGER BERLIN HEIDELBERG, BERLIN, HEIDELBERG, PAGE(S) 1 - 12, XP019137103, ISBN: 978-3-540-77504-1 Zusammenfassung Seite 2, Zeile 22 - Seite 3, Zeile 15; Abbildung 1 Seite 5, Zeile 19 - Seite 6, Zeile 10

## Beschreibung

### Gebiet der Erfindung

Die Erfindung betrifft eine Prozessor-Einrichtung mit einer Implementierung des kryptographischen Algorithmus DES. Insbesondere betrifft die Erfindung das technische Gebiet des Schützens des DES gegen Angriffe mittels White Box Kryptographie und eine Implementierung von DES in einer Darstellung, die an White Box Kryptographie angepasst ist.

### Hintergrund der Erfindung

Unter einer Prozessor-Einrichtung im Sinn der Erfindung wird ein Gerät oder sonstiger Gegenstand mit einem Prozessor verstanden, beispielsweise ein mobiles Endgerät, wie z.B. ein Smartphone. Durch den kryptographischen Algorithmus verwendete sicherheitskritische Daten, z.B. PINs, Passwörter, kryptographische Schlüssel etc. werden gesichert für die Prozessor-Einrichtung bereitgestellt. Traditionell werden sicherheitskritischen Daten, um sie vor einem Angriff durch unbefugte Person zu schützen, durch (Grey-Box-) Kryptographie gesichert. Hierzu werden die Daten auf einem Hardware-technisch eigenständigen Sicherheitselement des mobilen Endgeräts bereitgestellt, beispielsweise einer aus dem mobilen Endgerät herausnehmbaren SIM-Karte.

Ein alternativer Ansatz, der insbesondere auch für mobile Endgeräte anwendbar ist, die kein eigenständiges Sicherheitselement haben, basiert auf der White Box Kryptographie. Bei einer White Box Implementierung eines kryptographischen Algorithmus wird versucht, die sicherheitskritischen Daten, insbesondere geheime kryptographische Schlüssel, derart in der Implementierung zu verbergen, dass ein Angreifer, der vollen Zugriff auf die Implementierung hat, nicht dazu in der Lage ist, die sicherheitskritischen Daten aus der Implementierung zu extrahieren. Eine White Box Implementierung des AES-Kryptoalgorithmus (AES = Advanced Encryption Standard) ist beispielsweise aus der Veröffentlichung [1] "A Tutorial on White-box AES" von James A. Muir, Cryptology ePrint Archive, Report 2013/104 bekannt. Ebenso werden White Box Implementierungen von kryptographischen Algorithmen bzw. Routinen kommerziell vertrieben.

Eine ideale White Box Implementierung eines Krypto-Algorithmus hält sicherheitskritische Daten wie kryptographische Schlüssel so verborgen, dass sie durch einen Angriff nicht ermittelbar sind.

In der Patentanmeldung DE 102014016548.5 der Anmelderin der vorliegenden Patentanmeldung ist ein Verfahren zum Testen einer auf einem Prozessor ausführbaren White Box Implementierung, eines kryptographischen Algorithmus beschrieben, mit dem es den Erfindern gelungen ist, sicherheitskritische Daten durch einen Angriff zu ermitteln, was gemäß dem Konzept der White Box eigentlich nicht möglich sein sollte. Unter diesem Aspekt sind die getesteten White Box Implementierung auf Grund ihrer Angreifbarkeit definitionsgemäß nicht mehr perfekt White Box, werden aber auf Grund ihrer Zielsetzung perfekt zu sein nachfolgend weiterhin als White Box Implementierungen bezeichnet.

In der Fachveröffentlichung [3] "Differential Computation Analysis: Hiding your White-Box Designs is Not Enough", J.W. Bos, Ch. Hubain, W. Michiels, and Ph. Teuwen, eprint.iacr.org/2015/753, der Firma NXP ist ein ähnliches Testverfahren offenbart wie in der oben angeführten Patentanmeldung 102014016548.5, mit dem sich ebenfalls aus einer White Box Implementierung eines Kryptoalgorithmus der geheime Schlüssel mit statistischen Methoden ermitteln ließ.

In der Patentanmeldung 102014016548.5 wird weiter eine Handlungsanleitung für ein Verfahren zum Härten der auf einem Prozessor ausführbaren White Box Implementierung eines kryptographischen Algorithmus bereitgestellt. Dabei ist, um das Härten zu erzielen, die White Box Implementierung derart ausgestaltet, dass bei der Erzeugung des Ciphertextes wenigstens eine Lookup-Tabelle zum Einsatz kommt, um statisch Eingabewerte der Lookup-Tabelle auf Ausgabewerte der Lookup-Tabelle abzubilden. Das Verfahren umfasst den Schritt, dass die Lookup-Tabelle derart statistisch permutiert wird, dass die einzelnen Bits der permutierten Lookup-Tabelle im Wesentlichen nicht mit den Bits der Lookup-Tabelle korrelieren. Mit anderen Worten: die Lookup-Tabelle T wird derart mittels einer invertierbaren Abbildung f (dort als Permutation P bezeichnet) statistisch permutiert, dass die einzelnen Bits der permutierten Lookup-Tabelle T'(x) = f(T(x)) bei zufällig variierendem Input x nicht mit den Bits T(x) korrelieren.

Die Erfinder zur vorliegenden Anmeldung haben drei Konstruktionsvorschriften für eine Funktion f entwickelt, mit welcher Funktion f sich ein kryptographischer Algorithmus, insbesondere eine Block-Chiffre wie der Data Encryption Standard DES (oder auch AES), derart White Box maskieren lässt, dass der in der Patentanmeldung 102014016548.5 beschriebene Angriff verhindert oder zumindest stark erschwert ist. Das Grundprinzip dabei ist, Ausgabewerte von sicherheitskritischen Rechenschritten mit dazu statistisch unabhängigen Werten/Bits, sogenannten Verschleierungswerten/-bits y, zu verknüpfen. Statistisch unabhängig bedeutet dabei, dass die Ausgabewerte des Rechenschritts S[x] bei zufällig variierendem Eingabewert x nicht oder nur wenig mit den Verschleierungswerten/-bits korrelieren. Diese Konstruktionsvorschriften werden in gesonderten Patentanmeldungen beschrieben. Die Konstruktionsvorschriften wurden zunächst auf Grundlage der Standard-Darstellung von Krypto-Algorithmen, insbesondere des Data Encryption Standard DES, entwickelt und stellten sich als speicherintensiv und umständlich zu verwirklichen heraus. Folglich kam der Wunsch auf, eine einfachere Möglichkeit zu finden, die entwickelten Konstruktionsvorschriften für die Funktion f auf Krypto-Algorithmen, insbesondere Block-Chiffren, insbesondere den DES, anzuwenden.

Der Erfindung liegt die Aufgabe zugrunde, eine Prozessor-Einrichtung mit einer Implementierung des kryptographischen Algorithmus DES anzugeben, die sich auf einfachere Weise mittels White Box Kryptographie gegen Angriffe maskieren lässt als herkömmliche Standard-Implementierungen.

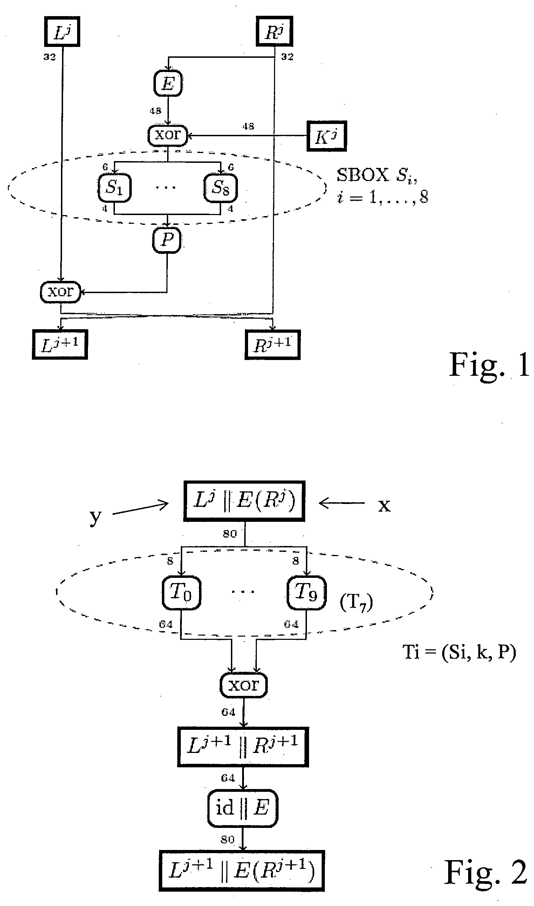

Im Dokument [4] "A White-Box DES Implementation for DRM Applications", S. Chow, P. Eisen, H. Johnson, P.C. van Oorschot, pre-proceedings for ACM DRM-2002, Oct 15, 2002, haben die Autoren bereits festgestellt, dass eine White Box Implementierung des DES fordernd ist (z.B. [4] Seite 2, Abs. 5) und eine alternative Darstellung des DES entwickelt, die sich einfacher zu einer White Box Implementierung ausbauen lässt. Dokument [4] geht zunächst aus von einem DES mit 16 Runden. Jede DES-Runde von DES in Standard-Darstellung (vgl. zur DES-Runde in Standard-Darstellung auch Fig. 1 der vorliegenden Anmeldung) hat acht S-Box-Operationen S1, ... S8, mit einer Expansions-Operation E und einer Verknüpfung (XOR) mit Schlüsselbits vor den S-Box-Operationen und einer Permutations-Operation P nach den S-Box-Operationen. Für die nachfolgende Runde werden Eingangsbits der rechten Seite R ohne Durchlaufen von S-Boxen als Eingangsbits der linken Seite an die nachfolgende DES-Runde bereitgestellt. Gemäß [4], Kap. 5 werden die Operationen zweier aufeinanderfolgende DES-Runden zusammengefasst und DES-Runden-übergreifend neu gruppiert. Dabei werden die im DES in Standard-Darstellung vorgesehenen acht S-Box-Operationen S1, ... S8 durch zwölf T-Box-Operationen ersetzt ([4] Kap. 5.1). In acht der T-Box-Operationen gehen neben den S-Box-Operationen zusätzlich Verknüpfungen mit Schlüsselbits am Eingang der S-Boxen ein. Vier weitere T-Boxen werden zur Aufnahme der lediglich an die nächste Runde zu übergebenden Eingangsbits bereitgestellt (in [4] teils als dummy T-Boxen bezeichnet). Zwischen den T-Box-Operationen T werden M-Box-Operationen durchgeführt, in denen die Permutations-Operation P einer Runde und die Expansions-Operation E der darauffolgenden Runde absorbiert sind ([4] Fig. 1 (a) und (b)). Unter anderem auf Grund der insgesamt zwölf erforderlichen T-Boxen und der zusätzlichen M-Box-Operation ist die in [4] angegebene White Box Implementierung speicherintensiv. Die teilweise Auflösung der Runden-Struktur des DES, da in den M-Boxen Operationen von zwei unterschiedlichen Runden enthalten sind, birgt zudem das Potential von Inkompatibilität, oder erfordert zumindest erhöhte Vorsicht und Achtsamkeit.

Das Dokument [5] "Clarifying Obfuscation: Improving the Security of White-Box Encoding", Hamilton Link et al, International Association for Cryptologic Research, Bd 20040202:165204, 30. Januar 2004 (2004-01-30), Seiten 1-11, XP061000811, offenbart eine Prozessor-Einrichtung mit einer darauf implementierten ausführbaren Implementierung des mehrere Runden umfassenden kryptographischen Algorithmus DES, wobei zunächst Permutations-Operation und XOR-Operation zu einer einzigen affinen Transformation AT zusammengefasst werden, S-Boxen in T-Boxen zusammengefasst werden sowie die übrigen DES-Komponenten in einer einzigen AT zusammengefasst werden. Weiter werden die T-Boxen wieder aufgelöst und zur Umsetzung des DES eine fusionierte T-Box und Multiplikations-Tabelle erzeugt.

### Zusammenfassung der Erfindung

Die Aufgabe wird durch eine Prozessor-Einrichtung nach Anspruch 1 gelöst. Ausführungsformen der Erfindung sind in den abhängigen Ansprüchen angegeben.

Die Prozessor-Einrichtung nach Anspruch 1 ist mit einer darauf implementierten ausführbaren Implementierung des mehrere Runden umfassenden kryptographischen Algorithmus DES ausgestattet. Der DES ist eingerichtet, unter Verwendung eines geheimen Schlüssels K aus einem Eingabetext einen Ausgabetext zu erzeugen. Die Implementierung umfasst in zumindest einer oder in jeder Runde - optional mit Ausnahme einer teilweise abweichend gestalteten ersten oder/und letzten Runde des Algorithmus:
- Empfangsmittel für rechte r und linke Eingangswerte 1 der Runde;
- eine Expansions-Operation E, eingerichtet, um zumindest manche rechte Eingangswerte r zu expandierten rechten Eingangswerten r' zu expandieren;
- einen implementierten Rechenschritt S (z.B. S-Box), eingerichtet, um expandierte rechte Eingangswerte r' als Rechenschritt-Eingabewerte x = r' auf Ausgabewerte s = S[x] abzubilden;
- eine XOR-Verknüpfungs-Operation am Rundenausgang, eingerichtet, Ausgabewerte s des Rechenschritts S der Runde mit linken Eingangswerten 1 der Runde zu verknüpfen und an die nachfolgende Runde bereitzustellen.

Weiter ist der Rechenschritt S als schlüsselabhängiger Rechenschritt implementiert, der, zusätzlich zu dem Rechenschritt S, weiter eine Schlüssel-Verknüpfungs-Operation zur Verknüpfung von Eingangswerten der Runde mit vom Schlüssel direkt oder indirekt abgeleiteten Schlüsselwerten der Runde umfasst. Ein schlüsselabhängiger Rechenschritt in einer Darstellung des Algorithmus DES ist insbesondere aus dem Dokument [4] bekannt.

Die Prozessor-Einrichtung ist dadurch gekennzeichnet, dass der Rechenschritt S genauer als kombinierter schlüsselabhängiger Rechenschritt T implementiert ist, der weiter eine der Runde zugehörige Permutations-Operation P umfasst, die eingerichtet ist, auf Ausgabewerte s des Rechenschritts S angewendet zu werden, und die Ausgabewerte s des Rechenschritt in permutierter Form an die im DES-Algorithmus vorkommende XOR-Verknüpfungs-Operation am Rundenausgang bereitzustellen.

Im kombinierten schlüsselabhängigen Rechenschritt T sind somit der DESspezifische (nicht-lineare) Rechenschritt, insbesondere die DES-Box-Operation, die Verknüpfung von Schlüsselwerten (z.B. Schlüsselbits) mit Eingabwerten (z.B. rechten Bits des DES-Runde-Eingangs) sowie die Permutation am DES-Runden-Ausgang in einem einzigen Rechenschritt T, also einer einzigen T-Box-Operation, zusammengefasst.

Da im kombinierten Rechenschritt T (T-Box) eine Verknüpfung von Schlüsselwerten mit Eingabewerten enthalten ist, würde durch Anwendung einer Maskierungs-Funktion f auf die Ausgabewerte des kombinierten Rechenschritts T (T-Box) die bei White Box Kryptographie gewünschte, den Schlüssel verbergende "White Box" Maskierung erreicht. Durch das Integrieren des Schlüssel-Verknüpfungs-Schritts in den kombinierten Rechenschritt (T-Box) wird somit ein erster vorbereitender Schritt für eine einfache White Box Maskierung geleistet. Weiter werden, da im kombinierten Rechenschritt T auch die Permutation P enthalten ist, durch den kombinierten Rechenschritt T (T-Box) die Ausgabewerte s des Rechenschritts S bereits in permutierter Form bereitgestellt, wie sie vor der XOR-Operation am DES-Runden-Ende benötigt werden. Soll zur White Box Maskierung der Implementierung des DES nun eine Maskierung des Rechenschritts S (z.B. S-Box) mittels der Maskierungsfunktion f durchgeführt werden, braucht die Maskierungs-Funktion f einfach nur auf die Ausgabewerte t des kombinierten schlüsselabhängigen Rechenschritts T angewandt zu werden.

Folglich ist gemäß Anspruch 1 eine Prozessor-Einrichtung mit einer DES-Implementierung geschaffen, die sich einfach White Box maskieren lässt.

Der kryptographische Algorithmus DES ist wahlweise im Verschlüsselungs- oder Entschlüsselungsmodus (encrypt / decrypt mode) eingerichtet.

Wahlweise umfasst der kombinierte schlüsselabhängige Rechenschritt T weiter eine der Runde zugehörige inverse Expansions-Operation E⁻¹, die eingerichtet ist, auf zumindest manche der expandierten rechten Eingangswerte r' angewendet zu werden, insbesondere um die Expansions-Operation rückgängig zu machen, und um die nicht-expandierten rechten Eingabewerte r als linke Eingabewerte 1 für die nachfolgende Runde bereitzustellen. Das Abbilden der expandierten rechten Eingabewerte r' durch den Rechenschritt S innerhalb der Runde von der inversen Expansions-Operation E⁻¹ bleibt hiervon unberührt, d.h. dem Rechenschritt S (z.B. S-Box) werden dennoch die expandierten rechten Eingabewerte (z.B. Bits) r' zugeführt.

Die nun innerhalb der DES-Runde in nicht-expandierter Form vorliegenden rechten Eingabewerte (z.B. Bits) können hingegen, wenn die Implementierung mit einer Maskierungs-Funktion f White Box maskiert wird, bei Bedarf als Verschleierungswerte y verwendet werden. Gegenüber der Standard-DES-Implementierung hat die hier vorgestellte Implementierung den Vorteil, dass die in nicht-expandierter Form vorliegenden rechten Eingabewerte innerhalb des kombinierten Rechenschritts T (T-Box) automatisch zur Verfügung stehen, und nicht in einer gesonderten Tabelle oder dergleichen zugeführt werden müssen.

Wahlweise ist der kombinierte schlüsselabhängige Rechenschritt T durch zehn T-Box-Operationen gebildet, wobei in acht der T-Box-Operation:
a) sechs Bits r'₆ᵢ, ... r'₆ᵢ₊₅ von durch die Expansions-Operation E expandierten rechten Bits r' durch eine S-Box-Operation zu vier Bit S-Box-Ausgabewerten s verarbeitet werden;
b) sechs Bits r'₆ᵢ, ... r'₆ᵢ₊₅ von durch die Expansions-Operation E expandierten rechten Bits r' durch die inverse Expansions-Operation E⁻¹ zu vier Bit linken Bits 1 der nachfolgenden Runde verarbeitet werden; und
c) zwei Bit l₂ᵢ, l₂ᵢ₊₁ von linken Bits als Eingang für die nachfolgende XOR-Operation bereitgestellt werden;
und in den verbleibenden zwei T-Box-Operationen acht Bits von linken Bits als Eingang für die nachfolgende XOR-Operation bereitgestellt werden.

Wahlweise werden in jeder T-Box-Operation acht Eingabebits zu 64 Ausgabebits verarbeitet.

Wahlweise umfasst die Implementierung in zumindest einer oder in jeder Runde - optional mit Ausnahme einer teilweise abweichend gestalteten ersten oder/ und letzten Runde des Algorithmus:
(i) eine mit Zufallswerten belegte invertierbare Abbildung B, die auf linke Eingangswerte 1 der Runde anzuwenden ist gemäß Bl, oder zwei mit Zufallswerten belegte invertierbare Abbildungen B und C, die auf linke 1 und rechte Eingangswerte r der Runde anzuwenden sind gemäß Bl + Cr;
(ii) die linken Eingangswerte 1 der Runde durch Bl bzw. Bl + Cr ersetzt werden; und
der kombinierte schlüsselabhängige Rechenschritt T weiter umfasst:
(iii) entsprechend zu (i) eine oder zwei mit Zufallswerten belegte inverse invertierbare Abbildung/en B⁻¹ bzw. B⁻¹ und C⁻¹, mit der/denen die invertierbare Abbildung/ en B bzw. B und C, rückgängig gemacht wird bzw. werden.

Durch die Abbildung B wird weitere Verschleierung erzeugt. Bei Verwenden der beiden Abbildungen B und C wird zudem ein vermischen von linken und rechten Eingabewerten erzielt, was die Konfusion erhöht. Durch die Durchmischung wird ferner erreicht, dass mögliche evtl. doch noch verbliebene kleinere statistische Abhängigkeiten von Eingabewerten 1 und r mit Ausgabewerten des Rechenschritts S[x] weiter reduziert werden.

Wahlweise umfasst die Implementierung, vorzugsweise der kombinierte schlüsselabhängige Rechenschritt T der Runde, zusätzlich eine weitere, auf Eingabewerte x des Rechenschritts S, oder auf Eingabewerte x des Rechenschritts S und auf als Verschleierungswerte y bereitgestellte linke oder/und rechte Eingabewerte 1, r der Runde, gemäß g⁻¹(x) bzw. g⁻¹(x, y) anzuwendende invertierbare Funktion g.

Dabei ist vorzugsweise g⁻¹(x) gleich der inversen Funktion einer Funktion g(x) ist, die auf Ausgabewerte der vorangehenden Runde, die der Runde unmittelbar vorangeht, angewendet worden ist. Hierdurch wird erreicht, dass sich die Maskierung des Ausgangs einer Runde im Eingang der nachfolgenden Runde automatisch wieder aufhebt.

Die Prozessor-Einrichtung ist umfasst wahlweise weiter eine implementierte Maskierungs-Operation V, die eingerichtet ist, Ausgabewerte t kombinierter schlüsselabhängiger Rechenschritte T zu maskieren, welche von demselben rechten Eingabewert r'i abhängig sind, mit von diesen rechten Eingabewerten r'i abhängigen Maskierungswerten v(r'i) mittels der Maskierungs-Operation V verknüpft werden, insbesondere bitweise verXORt werden, gemäß t XOR v(r'i).

Ein Beispiel zu Anspruch 8 ist Folgendes. Der Rechenschritt S sei die Vielzahl der acht S-Box-Operationen S1, ... S8 einer DES-Runde. In den S-Box Aufrufen S1 und S8 geht beispielsweise jeweils dasselbe rechte Bit r0 ein. Nun werden die entsprechenden Ausgänge der T-Boxen T1 und T8 mit Masken V0 (r0=0) und V1 (r0=1) verXORt. Die Ausgänge die erreicht werden, wenn das Bit r0=0 ist werden mit V0 maskiert, die Ausgänge die mit Bit r0=1 erreicht werden mit V1 maskiert. Bei der nachfolgenden XOR-Operation aller T-Boxen fallen die Maskierungen dann automatisch weg.

Wahlweise ist der kombinierte schlüsselabhängige Rechenschritt T mittels einer invertierbaren Funktion f zu einem White Box maskierten kombinierten schlüsselabhängiger Rechenschritt T' maskiert, gemäß T' = f^{∗}T.

Wahlweise umfasst die invertierbare Funktion f eine auf den Rechenschritt S angewandte affine Abbildung A, insbesondere eine lineare Abbildung, insbesondere eine Matrix MA, wobei die affine Abbildung A dazu eingerichtet ist, Ausgabewerte a von A zu erzeugen, indem A auf Ausgabewerte s des Rechenschritts S und zusätzlich auf als Verschleierungswerte y bereitgestellte rechte oder/und linke Eingangswerte r, 1 der Runde angewendet wird, so dass gilt a = A(S[x], y) = A(s, y), und wobei insgesamt durch die invertierbare Funktion f Ausgabewerte a = f (s,y) oder w = f (s,y) erzeugt werden.

Als Abbildung f ist wahlweise weiter eine Kombination (f = (c1, c2, ... )^{∗}A) aus einer affinen, vorzugsweise linearen, Abbildung A mit einer Eingangsbreite BA und einer Anzahl von einer oder mehreren invertierbaren, vorzugsweise nicht-linearen, Abbildungen c1, c2,... mit je einer Eingangsbreite Bc1, Bc2,... vorgesehen, wobei BA = Bc1 + Bc2 +..., wobei durch die Abbildung f Ausgabewerte w erzeugt werden. Eine derartige Zerlegung der Funktion f hat speziell im Fall mehrerer invertierbarer Abbildungen c1, c2, ... den Vorteil, dass jede einzelne Abbildung ci, i = 1, 2, ... eine schmalere Eingangsbreite hat als die gesamte Funktion f und die affine Funktion und somit einfacher zu handhaben ist.

Häufig werden affine, insbesondere lineare, Operationen in White-Box Implementierungen, die mit beliebigen invertierbaren, insbesondere nicht-linearen, verschleierten Rechenschritten durchgeführt werden, mittels Tabellenaufrufen umgesetzt. Die Tabellengröße und damit auch der Speicherbedarf der White-Box Implementierung wird durch die Eingangsbreite der beliebigen invertierbaren, insbesondere nicht-linearen, Abbildungen bestimmt. Deswegen ist es vorteilhaft, die Funktion f in eine affine, insbesondere lineare, Abbildung A und mehrere invertierbare, insbesondere nicht-lineare, Abbildungen ci, i = 1, 2, ... zu zerlegen. Die mehreren, z.B. eine Anzahl n, beliebigen invertierbaren bzw. nicht-linearen Abbildungen haben nur eine Eingangsbreite von 1/n der Eingangsbreite der affinen bzw. linearen Abbildung A. Die Anzahl der unterschiedlichen Elemente auf die die ci, i = 1, 2, ... angewandt werden, beträgt 2 ^Eingangsbreite. Somit wird der Speicherbedarf durch die Zerlegung drastisch reduziert. Die obenstehende Betrachtung zur Eingangsbreite von Tabellen wurde der Anschaulichkeit halber an Tabellen angestellt, gilt aber auf analoge Weise für die Eingangsbreiten anders dargestellter Abbildungen. Somit ist durch die Zerlegung gemäß Schritt a) die Funktion f für die White Box Maskierung besser handhabbar gemacht.

Die Prozessor-Einrichtung ist wahlweise mit einem Triple-DES ausgestattet. Hierzu umfasset die Prozessor-Einrichtung eine Triple-DES Implementierung, die aus drei wie vorstehend beschrieben gestalteten Implementierungen zusammengesetzt ist.

In einer mit invertierbaren Funktionen f White Box maskierten Prozessorwerden wahlweise für diejenigen von den drei Implementierungen von DES innerhalb des Triple-DES, bei denen dieselben Rundenschlüssel verwendet werden, dieselben White Box maskierten kombinierten schlüsselabhängigen Rechenschritte T' verwendet. Teilweise werden beim Triple-DES insbesondere für den ersten und den dritten DES dieselben Rundenschlüssel verwendet. In diesem Fall werden bei dieser Variante für den ersten und den dritten DES dieselben White Box maskierten kombinierten schlüsselabhängigen Rechenschritte T' verwendet.

Wahlweise werden, in einer mit invertierbaren Funktionen f White Box maskierten Prozessor-Einrichtung, für diejenigen von den drei Implementierungen von DES innerhalb des Triple-DES, bei denen dieselben Rundenschlüssel verwendet werden, dieselben Funktionen f verwendet wird, insbesondere wahlweise für den ersten und den dritten DES, analog zur Verfahrensweise bei den T'-Boxen.

### Kurze Beschreibung der Zeichnungen

Im Folgenden wird die Erfindung an Hand von Ausführungsbeispielen und unter Bezugnahme auf die Zeichnungen näher erläutert, in der zeigen:
- Fig. 1: eine DES-Runde in Standard-Darstellung, nach dem Stand der Technik, geeignet als Grundlage der Erfindung;
- Fig. 2: eine DES-Runde in einer alternativen Darstellung, mit in Operationen T eingebetteten S-Box-Operationen S, gemäß einer Ausführungsform der Erfindung;
- Fig. 3: eine Detaildarstellung einer einzelnen Operation T in der DES-Runde aus Fig. 2;
- Fig. 4: eine White Box Maskierung einer DES-Runde nach Fig. 2 und Fig. 3, gemäß Ausführungsformen der Erfindung.

### Detaillierte Beschreibung von Ausführungsbeispielen

Fig. 1 zeigt eine DES-Runde, nach dem Stand der Technik. Am Eingang einer DES-Runde werden 64 Bit Eingangsdaten in 32 Bit linke Seite L=1j, j=0,...,31 und 32 Bit rechte Seite R=rj, j=0,...31 aufgeteilt. Die Bits der rechten Seite R werden mittels einer Expansions-Öperation zu 48 Bit expandierten Eingangsdaten E=r'j, j=0,...47 der rechten Seite expandiert. Die 48 Bit expandierte Eingangsdaten E werden mit 48 Bit Schlüsseldaten K=kj, j=0,...47 mittels einer XOR-Operation verknüpft zu Eingabewerten xj = rj XOR kj, j=0,...47 für acht S-Boxen S. Jede der acht S-Boxen S = S1, ... S8 verarbeitet sechs Bit Eingabewerte xj zu je vier Bit Ausgabewerten sj. Die vier Bit breiten Ausgabewerte sj der acht S-Boxen S = S1, ... S8 werden einer Permutations-Operation P zugeführt., und die Ausgabewerte der Permutation P werden mit Bits der linken Seite verXORt und der nächsten DES-Runde zugeführt. Bei der Standard DES Implementierung endet die DES Runde hier.

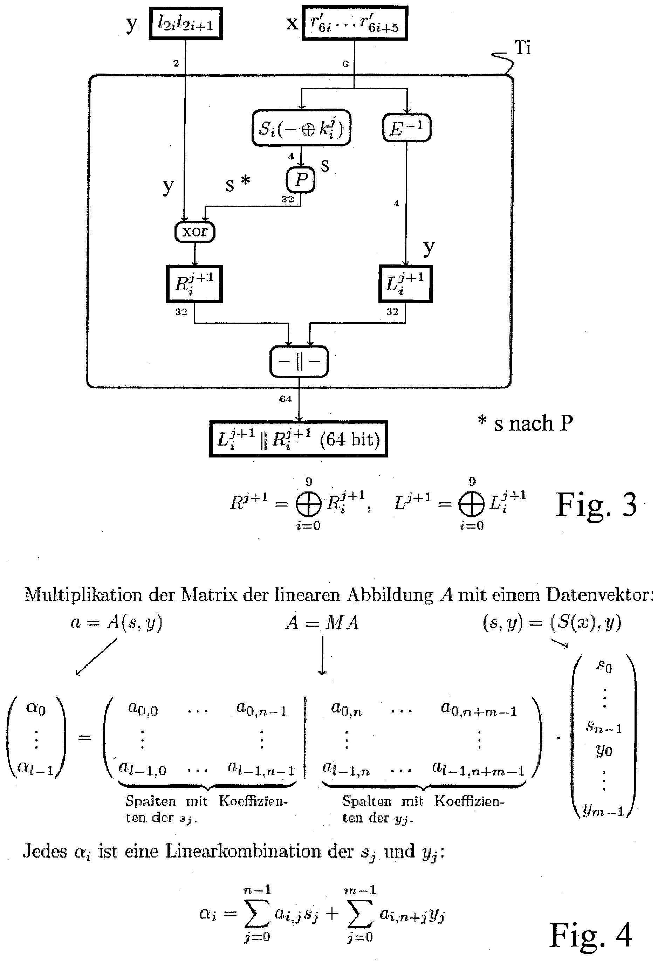

Im Folgenden wird anhand von Fig. 2 und Fig. 3 eine alternative Darstellung einer DES-Runde dargelegt, in welcher die für eine DES-Runde spezifischen Operationen S-Box-Operation S und Permutation P in einer kombinierten Operation T zusammengefasst sind. Hierbei wird die White Box Maskierung mit der Abbildung A, oder konkret mit der Matrix MA, auf die kombinierte Operation T angewandt, in welcher die S-Box-Operation enthalten ist (siehe Fig. 4).

Fig. 2 zeigt eine DES-Runde in einer alternativen Darstellung, speziell geeignet für die Anwendung einer White Box Maskierung gemäß der Erfindung. Am Eingang der DES-Runde werden, zunächst wie gemäß Fig. 1, 64 Bit Eingangsdaten in 32 Bit linke Seite L=1j, j=0,...,31 und 32 Bit rechte Seite R=rj, j=0,...31 aufgeteilt und die Bits der rechten Seite expandiert auf 48 Bit E(Rj). Bei der alternativen Darstellung aus Fig. 2 werden zwei oder mehr Bits aus den 32 Bit L=1j, j=0,...,31 der linken Seite der Runden-Eingangsdaten als Verschleierungsweite y verwendet. Hierdurch werden bei der Ausführung der DES-Runde die DES-spezifischen acht S-Box-Operationen dadurch ausgeführt, dass eine Mehrzahl von acht oder zehn kombinierten Operationen T = T0, ... T7 bzw. T0, ... T9 durchgeführt wird, in welchen die S-Box-Operationen S = S1, ... S8 mit umfasst sind.

Fig. 3 zeigt die Detailstruktur einer einzelnen kombinierten Operation T = Ti, i = 0, .... 7 (oder ggf. 0, ... 9) aus Fig. 2. (Optional zusätzlich vorhandenes Padding mit Null-Bits und Shifts sind in Fig. 3 zugunsten besserer Übersichtlichkeit weggelassen.) Im Unterschied zu den S-Boxen S der DES-Darstellung aus Fig. 1 sind in den kombinierten Operationen T = Ti aus Fig. 2 und Fig. 3 der Schlüssel kj und die DES-typische Permutation P bereits in die Operation T eingerechnet. Die S-Box mit dem eingerechneten Schlüssel kj ist in Fig. 3 durch das Operations-Kästchen Si(-XORkij) dargestellt, die Permutation durch P. Weiter werden vor dem Rechenschritt S, also vor den S-Box-Operationen S1,... S8, acht (oder zehn) Gesamttabellen T0, ... T7 (oder T0,...T9) erzeugt, in denen jeweils sechs Bit Eingangswerte xj = rj, j=0,...47 (gewonnen aus expandierten Bits r'j der rechten Seite; nicht mit k verXORt, da die Schlüsselbits kj bereits in S enthalten sind) für die acht S-Boxen S und zwei Bits lj, j=0,...,31 der linken Seite der Runden-Eingangswerte enthalten sind, und bei zehn Gesamttabellen Ti weitere Bits der linken Seite lj, j=0,...,31 der Runde enthalten sind. Die zwei (oder mehr) Bits der linken Seite lj der Runde werden hierbei nicht durch die S-Boxen verarbeitet. Die je sechs Bit Eingangswerte xj = rj XOR kj werden je durch eine S-Box verarbeitet. Somit liefern die Gesamttabellen Ti Ausgabewerte, die sowohl Ausgangswerte sj der S-Boxen als auch Bits der linken Seite lj der Runde enthalten.

Wie in Fig. 4 dargestellt, wird die White Box Maskierung der Implementierung durchgeführt, indem die Ausgabewerte der kombinierten Operationen Ti der erfindungsgemäßen Matrix MA zugeführt werden, durch welche die erfindungsgemäße affine Abbildung A dargestellt ist. Der Vektor rechts enthält Nutzdaten, nämlich Ausgabewerte si von S-Box-Operationen, sowie Verschleierungswerte y, beispielsweise linke Bits 1 oder nicht durch S-Boxen verarbeitete rechte Bits r der Runden-Eingangswerte x. Hierbei werden sowohl die Eingangswerte x, d.h. die Bits rj der rechten Seite, als auch die statistisch unabhängigen Werte y, d.h. die als Verschleierungswerte verwendeten Bits lj der linken Seite des DES-Runden-Eingangswerts, der Matrix MA zugeführt. Ein gesondertes Holen der statistisch unabhängigen Werte y = lj ist hierbei nicht erforderlich, da sie bereits in der kombinierten Operation T enthalten sind. Aus diesem Grund ist die DES-Darstellung aus Fig. 2 zur Implementierung der Erfindung besonders gut geeignet. Das Ergebnis der Maskierung sind White Box maskierte Operationen Ti', i = 0, ... 9 oder i = 0, ... 7. Dieser White Box maskierten Operationen Ti' werden in die Prozessor-Einrichtung implementiert.

In der Ausführungsform aus Fig. 4 ist die in der zur White Box Maskierung verwendeten Abbildung f enthaltene affine Abbildung A als Matrix MA gestaltet, mit Koeffizienten aij, i = 0, ... 1-1, j = 0, ... n+m-1.

Die Matrix MA wird mit dem Eingangs-Vektor (s,y) multipliziert, der S-Box-Ausgangswerte s = S[x] (z.B. Bits r der rechten Seite) und Verschleierungswerte y (z.B. Bits der linken Seite, ggf. zudem Bits r der rechten Seite) enthält, um einen Ausgangs-Vektor a zu erzeugen. Die Summenformel in Fig. 4 verdeutlicht diesen Sachverhalt für eine einzelne Zeile ai der Matrix MA, und einen hiermit erzeugten einzelnen Eintrag αi des Ausgangs-Vektors a. Im Eingangs-Vektor (s,y) sind in den oberen n Einträgen die S-Box-Ausgangswerte s und in den unteren m Einträgen die Verschleierungswerte y (linke Bits 1, ggf. auch rechte Bits r) enthalten. In der Matrix MA sind entsprechend links die mit den S-Box-Ausgangswerte s = s0, ... sn-1 zu multiplizierenden n Koeffizienten aij, j = 0, ... n-1 von MA enthalten. Rechts in der Matrix MA sind die mit den Verschleierungswerten y = y0,... ym-1 zu multiplizierenden m Koeffizienten aij, j = n, ... n+m-1 von MA enthalten.

### Glossar

S: Rechenschritt, insbesondere DES SBOX
T: kombinierte Operation umfassend Rechenschritt S
T': White Box verschleierte kombinierte Operation T
x: Eingabewert in Rechenschritt S
y: Verschleierungswert
r: rechte Seite der Eingabe einer Runde
r': expandierte rechte Seite der Eingabe einer Runde
1: linke Seite der Eingabe einer Runde
s: Ausgabewert des Rechenschritts S (z.B. S-Box)

### Zitierter Stand der Technik

[1] "A Tutorial on White-box AES", James A. Muir, Cryptology ePrint Archive, Report 2013/104, eprint.iacr.org/2013/104
[2] DE 102014016548.5 (eingereicht am 10.11.2014)
[3] "Differential Computation Analysis: Hiding your White-Box Designs is Not Enough", J.W. Bos, Ch. Hubain, W. Michiels, and Ph. Teuwen, eprint.iacr.org/2015/753, abgerufen am 31.7.2015
[4] "A White-Box DES Implementation for DRM Applications", S. Chow, P. Eisen, H. Johnson, P.C. van Oorschot, pre-proceedings for ACM DRM-2002, Oct 15, 2002, https://crypto.stanford.edu/DRM2002/whitebox.pdf
[5] "Clarifying Obfuscation: Improving the Security of White-Box Encoding", Hamilton Link et al, International Association for Cryptologic Research, Bd 20040202:165204, 30. Januar 2004 (2004-01-30), Seiten 1-11, XP061000811

## Patentansprüche

1. Prozessor-Einrichtung mit einer darauf implementierten ausführbaren Implementierung des mehrere Runden umfassenden kryptographischen Algorithmus DES, der eingerichtet ist, unter Verwendung eines geheimen Schlüssels K aus einem Eingabetext einen Ausgabetext zu erzeugen, wobei die Implementierung in zumindest einer oder in jeder Runde - optional mit Ausnahme einer teilweise abweichend gestalteten ersten oder/und letzten Runde des Algorithmus - umfasst:
- Empfangsmittel für rechte r und linke Eingangswerte 1 der Runde;
- eine Expansions-Operation E, eingerichtet, um zumindest manche rechte Eingangswerte r zu expandierten rechten Eingangswerten r' zu expandieren;
- einen implementierten Rechenschritt S, eingerichtet, um expandierte rechte Eingangswerte r' als Rechenschritt-Eingabewerte x = r' auf Ausgabewerte s = S[x] abzubilden;
- eine XOR-Verknüpfungs-Operation am Rundenausgang, eingerichtet, Ausgabewerte s des Rechenschritts S der Runde mit linken Eingangswerten 1 der Runde zu verknüpfen und an die nachfolgende Runde bereitzustellen; wobei der Rechenschritt S als schlüsselabhängiger Rechenschritt implementiert ist, der, zusätzlich zu dem Rechenschritt S, weiter eine Schlüssel-Verknüpfungs-Operation zur Verknüpfung von Eingangswerten der Runde mit vom Schlüssel direkt oder indirekt abgeleiteten Schlüsselwerten der Runde umfasst;
**dadurch gekennzeichnet, dass:**
der Rechenschritt S als kombinierter schlüsselabhängiger Rechenschritt T implementiert ist, der weiter umfasst:
- eine der Runde zugehörige Permutations-Operation P, eingerichtet auf Ausgabewerte s des Rechenschritts S angewendet zu werden, die XOR-Verknüpfungs-Operation und die Ausgabewerte s des Rechenschritt in permutierter Form an die XOR-Verknüpfungs-Operation am Rundenausgang bereitzustellen, wobei auf zumindest eine Teilmenge der linken Eingangswerte 1 der Runde nicht der Rechenschritt S angewendet wird und wobei auf jeden der rechten Eingangswerte x = r XOR k der Rechenschritt S angewendet wird, so dass der Rechenschritt T in jeder Runde Ausgabewerte liefert, die sowohl Ausgangswerte s des Rechenschritts S als auch Bits der linken Seite der Runde enthalten.

2. Prozessor-Einrichtung nach Anspruch 1,
wobei der kombinierte schlüsselabhängige Rechenschritt T weiter umfasst:
- eine der Runde zugehörige inverse Expansions-Operation E⁻¹, eingerichtet auf zumindest manche der expandierten rechten Eingangswerte r' angewendet zu werden, insbesondere um die Expansions-Operation rückgängig zu machen, und um die nicht-expandierten rechten Eingabewerte r als linke Eingabewerte 1 für die nachfolgende Runde bereitzustellen, wobei insbesondere das Abbilden der expandierten rechten Eingabewerte r' durch den Rechenschritt S innerhalb der Runde von der inversen Expansions-Operation E⁻¹ unberührt bleibt.

3. Prozessor-Einrichtung nach Anspruch 2, wobei der kombinierte schlüsselabhängige Rechenschritt T durch zehn T-Box-Operationen gebildet ist, wobei in acht der T-Box-Operation:
a) sechs Bits r'₆ᵢ, ... r'₆ᵢ₊₅ von durch die Expansions-Operation E expandierten rechten Bits r' durch eine S-Box-Operation zu vier Bit S-Box-Ausgabewerten s verarbeitet werden;
b) sechs Bits r'₆ᵢ, ... r'₆ᵢ₊₅ von durch die Expansions-Operation E expandierten rechten Bits r' durch die inverse Expansions-Operation E⁻¹ zu vier Bit linken Bits 1 der nachfolgenden Runde verarbeitet werden; und
c) zwei Bit l₂ᵢ, l₂ᵢ₊₁ von linken Bits als Eingang für die nachfolgende XOR-Operation bereitgestellt werden;
und in den verbleibenden zwei T-Box-Operationen acht Bits von linken Bits als Eingang für die nachfolgende XOR-Operation bereitgestellt werden.

4. Prozessor-Einrichtung nach Anspruch 3, wobei jede T-Box-Operation acht Eingabebits zu 64 Ausgabebits verarbeitet.

5. Prozessor-Einrichtung nach einem der Ansprüche 1 bis 4, wobei die Implementierung in zumindest einer oder in jeder Runde - optional mit Ausnahme einer teilweise abweichend gestalteten ersten oder/und letzten Runde des Algorithmus - umfasst:
(i) eine mit Zufallswerten belegte invertierbare Abbildung B, die auf linke Eingangswerte 1 der Runde anzuwenden ist gemäß Bl, oder zwei mit Zufallswerten belegte invertierbare Abbildungen B und C, die auf linke 1 und rechte Eingangswerte r der Runde anzuwenden sind gemäß Bl + Cr;
(ii) die linken Eingangswerte 1 der Runde durch Bl bzw. Bl + Cr ersetzt werden; und
der kombinierte schlüsselabhängige Rechenschritt T weiter umfasst:
(iii) entsprechend zu (i) eine oder zwei mit Zufallswerten belegte inverse invertierbare Abbildung/ en B⁻¹ bzw. B⁻¹ und C⁻¹, mit der/ denen die invertierbare Abbildung/ en B bzw. B und C, rückgängig gemacht wird bzw. werden.

6. Prozessor-Einrichtung nach einem der Ansprüche 1 bis 5, wobei die Implementierung, vorzugsweise der kombinierte schlüsselabhängige Rechenschritt T der Runde, zusätzlich eine weitere, auf Eingabewerte x des Rechenschritts S, oder auf Eingabewerte x des Rechenschritts S und auf als Verschleierungswerte y bereitgestellte linke oder/und rechte Eingabewerte l, r der Runde, gemäß g⁻¹(x) bzw. g⁻¹(x, y) anzuwendende invertierbare Funktion g umfasst.

7. Prozessor-Einrichtung nach Anspruch 6, wobei g⁻¹(x) gleich der inversen Funktion einer Funktion g(x) ist, die auf Ausgabewerte der vorangehenden Runde, die der Runde unmittelbar vorangeht, angewendet worden ist.

8. Prozessor-Einrichtung nach einem der Ansprüche 1 bis 7 in Verbindung mit Anspruch 2, weiter umfassend eine implementierte Maskierungs-Operation V, eingerichtet, um Ausgabewerte t kombinierter schlüsselabhängiger Rechenschritte T zu maskieren, welche von demselben rechten Eingabewert r'i abhängig sind, mit von diesen rechten Eingabewerten r'i abhängigen Maskierungswerten v(r'i) mittels der Maskierungs-Operation V verknüpft werden, insbesondere bitweise verXORt werden, gemäß t XOR v(r'i).

9. Prozessor-Einrichtung nach einem der Ansprüche 1 bis 8, wobei der kombinierte schlüsselabhängige Rechenschritt T mittels einer invertierbaren Funktion f zu einem White Box maskierten kombinierten schlüsselabhängiger Rechenschritt T' maskiert ist, gemäß T' = f^{∗}T.

10. Prozessor-Einrichtung nach Anspruch 9, wobei die invertierbare Funktion f eine auf den Rechenschritt S angewandte affine Abbildung A umfasst, insbesondere eine lineare Abbildung, insbesondere eine Matrix MA, wobei die affine Abbildung A dazu eingerichtet ist, Ausgabewerte a von A zu erzeugen, indem A auf Ausgabewerte s des Rechenschritts S und zusätzlich auf als Verschleierungswerte y bereitgestellte rechte oder/und linke Eingangswerte r, l der Runde angewendet wird, so dass gilt a = A(S[x], y) = A(s, y), und wobei insgesamt durch die invertierbare Funktion f Ausgabewerte w = f (s,y) erzeugt werden.

11. Prozessor-Einrichtung nach einem der Ansprüche 1 bis 10, wobei der kombinierte schlüsselabhängige Rechenschritt T in jeweils 2, 4, 8 oder 16 Runden mit derselben invertierbaren Funktion f zu einem White Box maskierten kombinierten schlüsselabhängigen Rechenschritt T' maskiert ist, insbesondere in jeder Runde mit einer anderen invertierbaren Funktion f.

12. Prozessor-Einrichtung umfassend eine Triple-DES Implementierung, die aus drei nach einem der Ansprüche 1 bis 11 gestalteten Implementierungen zusammengesetzt ist.

13. Prozessor-Einrichtung nach Anspruch 12, gemäß Anspruch 9 White Box maskiert mit invertierbaren Funktionen f, wobei für diejenigen von den drei Implementierungen von DES innerhalb des Triple-DES, bei denen dieselben Rundenschlüssel verwendet werden, dieselben White Box maskierten kombinierten schlüsselabhängigen Rechenschritte T' verwendet werden, insbesondere wahlweise für den ersten und den dritten DES.

14. Prozessor-Einrichtung nach Anspruch 12, gemäß Anspruch 9 White Box maskiert mit invertierbaren Funktionen f, wobei für diejenigen von den drei Implementierungen von DES innerhalb des Triple-DES, bei denen dieselben Rundenschlüssel verwendet werden, dieselben Funktionen f verwendet werden, insbesondere wahlweise für den ersten und den dritten DES.

## Claims

1. A processor device having an executable implementation of the cryptographic algorithm DES comprising several rounds implemented thereon, which cryptographic algorithm DES is arranged to generate, using a secret key K from an entry text, an exit text, wherein the implementation comprises in at least one or in each round - optionally with the exception of a first or/and last round of the algorithm configured partly in a deviating manner:
- reception means for right r and left input values 1 of the round;
- an expansion operation E arranged to expand at least some of the right input values r into expanded right input values r';
- an implemented computation step S arranged to map expanded right input values r' as computation step entry values x = r' onto exit values s = S[x];
- a XOR linkage operation at the round exit, arranged to link exit values s of the computation step S of the round with left input values 1 of the round and to supply these to the subsequent round;
wherein the computation step S is implemented as a key-dependent computation step which in addition to the computation step S further comprises a key linkage operation for linking input values of the round with key values of the round derived directly or indirectly from the key;
**characterized in that:**
the computation step S is implemented as a combined key-dependent computation step T which further comprises:
- a permutation operation P associated with the round, arranged to be applied to exit values s of the computation step S and to supply the XOR linkage operation and the exit values s of the computation step in permutated form to the XOR linkage operation at the round exit, wherein to at least a subset of the left input values 1 of the round not the computation step S is applied and wherein to each of the right input values x = r XOR k the computation step S is applied, so that the computation step T in each round delivers exit values which include both output values s of the computation step S and bits of the left side of the round.

2. The processor device according to claim 1,
wherein the combined key-dependent computation step T further comprises:
- an inverse expansion operation E⁻¹ associated with the round, arranged to be applied to at least some of the expanded right input values r' in particular for undoing the expansion operation and for supplying the non-expanded right entry values r as left entry values 1 for the subsequent round, wherein in particular the mapping of the expanded right entry values r' by the computation step S within the round remains unaffected by the inverse expansion operation E-¹.

3. The processor device according to claim 2, wherein the combined key-dependent computation step T is formed by ten T-box operations, wherein in eight of the T-box operations:
a) six bits r'₆ᵢ, ... r'₆ᵢ₊₅ are processed by right bits r', which were expanded by the expansion operation E, by an S-box operation into four bits of S-box exit values s;
b) six bits r'₆ᵢ,... r'₆ᵢ₊₅ are processed by right bits r', which were expanded by the expansion operation E, by the inverse expansion operation E⁻¹ into four bits of left bits 1 of the subsequent round; and
c) two bits l₂ᵢ, l₂ᵢ₊₁ of left bits are supplied as an input for the subsequent XOR operation;
and in the remaining two T-box operations eight bits of left bits are supplied as an input for the subsequent XOR operation.

4. The processor device according to claim 3, wherein each T-box operation processes eight entry bits into 64 exit bits.

5. The processor device according to any of claims 1 to 4, wherein
the implementation comprises in at least one or in each round - optionally with the exception of a first or/and last round of the algorithm configured partly in a deviating manner:
(i) an invertible mapping B occupied with random values, which is to be applied to left input values 1 of the round according to Bl, or two invertible mappings B and C occupied with random values, which are to be applied to left 1 and right input values r of the round according to Bl + Cr;
(ii) the left input values 1 of the round are replaced by Bl or Bl + Cr; and
the combined key-dependent computation step T further comprises:
(iii) corresponding to (i) one or two inverse invertible mapping/s B⁻¹ or B⁻¹ and C⁻¹ occupied with random values, with which the invertible mapping/ s B or B and C is/are undone.

6. The processor device according to any of claims 1 to 5, wherein the implementation, preferably the combined key-dependent computation step T of the round, additionally comprises a further invertible function g to be applied according to g⁻¹(x) or g⁻¹(x, y) to entry values x of the computation step S, or to entry values x of the computation step S and to left or/and right entry values l, r of the round supplied as obfuscation values y.

7. The processor device according to claim 6, wherein g⁻¹(x) is equal to the inverse function of a function g(x) which has been applied to exit values of the preceding round which directly precedes the round.

8. The processor device according to any of claims 1 to 7 in connection with claim 2, further comprising an implemented masking operation V arranged to mask exit values t of combined key-dependent computation steps T, which are dependent on the same right entry value r'i, are linked with masking values v(r'i) dependent on these right entry values r'i by means of the masking operation V, in particular are bit-wisely XORed according to t XOR v(r'i).

9. The processor device according to any of claims 1 to 8, wherein the combined key-dependent computation step T is masked, by means of an invertible function f, into a white-box-masked combined key-dependent computation step T', according to T' = f^{∗}T.

10. The processor device according to claim 9, wherein the invertible function f comprises an affine mapping A applied to the computation step S, in particular a linear mapping, in particular a matrix MA, wherein the affine mapping A is arranged to generate exit values a from A, by A being applied to exit values s of the computation step S and, in addition, to right or/and left input values r, 1 of the round supplied as obfuscation values y, so that it holds that a = A(S[x], y) = A(s, y), and wherein, altogether, by the invertible function f exit values w = f (s,y) are generated.

11. The processor device according to any of claims 1 to 10, wherein the combined key-dependent computation step T is masked in respectively 2, 4, 8 or 16 rounds with the same invertible function f into a white-box-masked combined key-dependent computation step T', in particular in each round with a different invertible function f.

12. A processor device comprising a triple DES implementation which is composed of three implementations configured according to any of claims 1 to 11.

13. The processor device according to claim 12, according to claim 9 white-box-masked with invertible functions f, wherein for those of the three implementations of DES within the triple DES for which the same round keys are used the same white-box-masked combined key-dependent computation steps T' are used, in particular selectively for the first and the third DES.

14. The processor device according to claim 12, according to claim 9 white-box-masked with invertible functions f, wherein for those of the three implementations of DES within the triple DES for which the same round keys are used, the same functions f are used, in particular selectively for the first and the third DES.

## Revendications

1. Dispositif doté d'un processeur, sur lequel est implémentée une implémentation exécutable, de l'algorithme cryptographique DES comprenant plusieurs rondes, lequel est conçu pour, en utilisant une clé secrète K, générer à partir d'un texte de saisie un texte d'émission, cependant que l'implémentation, dans moins une ou dans chaque ronde - en option à l'exception d'une première ou/et dernière ronde, partiellement configurée de manière divergente, de l'algorithme, comprend :
- des moyens de réception pour des valeurs d'entrée droites r et gauches 1 de la ronde ;
- une opération d'expansion E conçue pour expanser au moins certaines valeurs d'entrée droites r de manière à obtenir des valeurs d'entrée droites expansées r' ;
- une étape de calcul S implémentée, conçue pour transformer des valeurs d'entrée r' droites expansées en tant que valeurs de saisie d'étape de calcul x = r' sur des valeurs d'émission s = S[x] ;
- une opération de liaison XOR à la sortie de ronde, conçue pour lier des valeurs d'émission s de l'étape de calcul S de la ronde avec des valeurs d'entrée gauches 1 de la ronde et de mettre ceci à la disposition de la prochaine ronde ;
cependant que l'étape de calcul S est implémentée en tant qu'étape de calcul S dépendante d'une clé, laquelle, en plus de l'étape de calcul S, comprend en plus une opération de liaison à une clé pour la liaison de valeurs d'entrée de la ronde avec des valeurs de clé de la ronde dérivées directement ou indirectement de la clé ;
**caractérisé en ce que**
l'étape de calcul S est implémentée en tant qu'étape de calcul T combinée dépendante d'une clé, laquelle comprend en outre :
- une opération de permutation P appartenant à la ronde, conçue pour être appliquée sur des valeurs d'émission s de l'étape de calcul S, et pour, sous forme permutée, mettre à disposition, à la sortie de ronde, l'opération de liaison XOR et les valeurs d'émission s de l'étape de calcul à l'opération de liaison XOR, cependant que, sur au moins une quantité partielle des valeurs d'entrée gauches 1 de la ronde, l'étape de calcul S n'est pas appliquée, et cependant que, sur chacune des valeurs d'entrée droites x = r XOR k, l'étape de calcul S est appliquée, de telle sorte que l'étape de calcul T fournit à chaque ronde des valeurs d'émission qui contiennent tant des valeurs de sortie s de l'étape de calcul S que des bits du côté gauche de la ronde.

2. Dispositif à processeur selon la revendication 1,
cependant que l'étape de calcul T combinée dépendante d'une clé comprend en outre :
- une opération d'expansion E⁻¹inverse appartenant à la ronde, conçue pour être appliquée sur au moins certaines des valeurs d'entrée r' droites expansées, en particulier afin d'annuler l'opération d'expansion et afin de, pour la ronde suivante, mettre à disposition en tant que valeurs de saisie gauches 1 les valeurs de saisie droites r non expansées, cependant qu'en particulier la transformation, par l'étape de calcul S, des valeurs de saisie droites r' expansées n'est pas affectée à l'intérieur de la ronde par l'opération d'expansion E⁻¹ inverse.

3. Dispositif à processeur selon la revendication 2, cependant que l'étape de calcul T combinée dépendante d'une clé est constituée par dix opérations T-Box, cependant que, dans huit des opérations T-Box :
a) six bits r'₆ᵢ, ... r'₆ᵢ₊₅ de bits droits r' expansés par l'opération d'expansion E sont traités par une opération S-Box de manière à obtenir quatre valeurs d'émission s de bit S-Box ;
b) six bits r'₆ᵢ, ... r'₆ᵢ₊₅ de bits droits r' expansés par l'opération d'expansion E sont traités par l'opération d'expansion E⁻¹ inverse de manière à obtenir quatre bits 1 gauches de bit de la ronde suivante ; et
c) deux bits l₂ᵢ, l₂ᵢ₊₁ de bits gauches sont mis à disposition comme entrée pour l'opération XOR suivante ;
et, dans les deux opérations T-Box restantes, huit bits de bits gauches sont mis à disposition comme entrée pour l'opération XOR suivante.

4. Dispositif à processeur selon la revendication 3, cependant que chaque opération T-Box traite huit bits de saisie de manière à obtenir 64 bits d'émission.

5. Dispositif à processeur selon une des revendications de 1 à 4, cependant que
l'implémentation comprend dans moins une ou dans chaque ronde - en option à l'exception d'une première ou/et dernière ronde, partiellement configurée de manière divergente, de l'algorithme :
(i) une transformation B inversible affectée de valeurs aléatoires et devant être, conformément à Bl, appliquée sur des valeurs de saisie gauches 1 de la ronde, ou deux transformation s B et C inversibles affectées de valeurs aléatoires et devant être, conformément à Bl + Cr, appliquées sur des valeurs de saisie gauches 1 et droites r de la ronde ;
(ii) les valeurs de saisie gauches 1 de la ronde sont remplacées par Bl ou par Bl + Cr ; et
l'étape de calcul T combinée dépendante d'une clé comprend en outre :
(iii) en correspondance avec (i), une ou deux transformation(s) B⁻¹ ou B⁻¹ et C⁻¹ avec laquelle/lesquelles la/les transformation(s) inversible(s) B ou B et C est/sont annulée(s).

6. Dispositif à processeur selon une des revendications de 1 à 5, cependant que l'implémentation, de préférence de l'étape de calcul T de la ronde, combinée dépendante d'une clé, comprend en outre une autre fonction g inversible à appliquer, conformément à g⁻¹(x) ou à g⁻¹(x, y), à des valeurs de saisie x de l'étape de calcul S, ou à des valeurs de saisie x de l'étape de calcul S et à des valeurs de saisie gauches et/ou droites l, r de la ronde mises à disposition en tant que valeurs d'obfuscation y.

7. Dispositif à processeur selon la revendication 6, cependant que g⁻¹(x) est égale à la fonction inverse d'une fonction g(x) qui a été appliquée à des valeurs d'émission de la ronde précédente qui précède immédiatement la ronde.

8. Dispositif à processeur selon une des revendications de 1 à 7 en corrélation avec la revendication 2, comprenant en outre une opération de masquage V implémentée, conçue pour masquer des valeurs d'émission t, d'étapes de calcul T combinées dépendantes d'une clé, lesquelles dépendent de la même valeur de saisie droite r'i, sont liées, en particulier liées par XOR, conformément à t XOR v(ri), au moyen de l'opération de masquage V, avec des valeurs de masquage v(r'i) dépendantes de ces valeurs de saisie droites r'i.

9. Dispositif à processeur selon une des revendications de 1 à 8, cependant que l'étape de calcul T combinée dépendante d'une clé est masquée au moyen d'un fonction f inversible de manière à obtenir une étape de calcul T' combinée dépendante d'une clé masquée en boîte blanche, conformément à T' = f^{∗}T.

10. Dispositif à processeur selon la revendication 9, cependant que la fonction f inversible comprend une application affine A appliquée à l'étape de calcul S, en particulier une application linéaire, en particulier une matrice MA, cependant que l'application affine A est conçue pour générer des valeurs d'émission a de A, ce qui a lieu en ce que A est appliqué sur des valeurs d'émission s de l'étape de calcul S et, en plus, sur des valeurs de saisie droites et/ou gauches r, 1 de la ronde mises à disposition en tant que valeurs d'obfuscation y, de telle sorte qu'il est entendu que a = A(S[x], y) = A (s, y), et cependant que, au total, par la fonction f inversible, des valeurs d'émission w = f (s,y) sont générées.

11. Dispositif à processeur selon une des revendications de 1 à 10, cependant que l'étape de calcul T combinée dépendante d'une clé est masquée dans respectivement 2, 4 , 8 ou 16 rondes avec la même fonction f inversible de manière à obtenir une étape de calcul T' combinée dépendante d'une clé masquée en boîte blanche, en particulier dans chaque ronde avec une autre fonction f inversible.

12. Dispositif à processeur comprenant une implémentation Triple DES qui est composée par trois implémentations configurées suivant une des revendications de 1 à 11.

13. Dispositif à processeur selon la revendication 12, masquée en boîte blanche avec fonctions f inversibles suivant la revendication 9, cependant que, pou celles des trois implémentations de DES à l'intérieur du Triple DES dans lesquelles les mêmes clés de ronde sont utilisées, les mêmes étapes de calcul T' combinées dépendantes d'une clé masquées en boîte blanche sont utilisées, en particulier au choix pour le premier et le troisième DES.

14. Dispositif à processeur selon la revendication 12, masquée en boîte blanche avec fonctions f inversibles suivant la revendication 9, cependant que, pour celles des trois implémentations de DES à l'intérieur du Triple DES dans lesquelles les mêmes clés de ronde sont utilisées, les mêmes fonctions f sont utilisées, en particulier au choix pour le premier et le troisième DES.
